(19) **Europäisches Patentamt / European Patent Office / Office européen des brevets**

(11) **EP 1 739 102 A1**

(12) **EUROPEAN PATENT APPLICATION**
published in accordance with Art. 158(3) EPC

(43) Date of publication:
**03.01.2007 Bulletin 2007/01**

(21) Application number: **04808173.1**

(22) Date of filing: **27.12.2004**

(51) Int Cl.:
*C08F 6/22* $^{(2006.01)}$     *C08F 265/04* $^{(2006.01)}$
*C08F 279/02* $^{(2006.01)}$

(86) International application number:
**PCT/JP2004/019823**

(87) International publication number:
**WO 2005/085299 (15.09.2005 Gazette 2005/37)**

(84) Designated Contracting States:
**AT BE BG CH CY CZ DE DK EE ES FI FR GB GR HU IE IS IT LI LT LU MC NL PL PT RO SE SI SK TR**

(30) Priority: **08.03.2004 JP 2004063707**
**09.08.2004 JP 2004232225**

(71) Applicant: **KANEKA CORPORATION**
**Osaka-shi, Osaka 530-8288 (JP)**

(72) Inventor: **UEDA, Takashi**
**Hyogo, 6750301 (JP)**

(74) Representative: **Vossius & Partner**
**Siebertstrasse 4**
**81675 München (DE)**

(54) **METHOD FOR PRODUCING COAGULATED PARTICLES FROM EMULSION POLYMERIZATION LATEX**

(57) A method for manufacturing coagulated particles from a latex prepared by emulsion polymerization has been eagerly demanded, which provides coagulated particles having a low content of fine powder and a low water content, and makes possible a granulating operation in the vicinity of the softening temperature of the polymer. A method for manufacturing coagulated particles from a latex prepared by emulsion polymerization is provided which comprises step (A) of adjusting the temperature of a latex prepared by emulsion polymerization within the range of Tm $\pm$ 15°C wherein Tm represents the softening temperature of the polymer in the latex; step (B) of adding polyethylene oxide; step (C) of adding a coagulant to cause phase separation of a polymer component from an aqueous phase; step (D) of further adding a coagulant to form an aqueous suspension containing coagulated polymer particles having a volume-average particle size of 50 to 500 $\mu$m; and step (E) of adjusting the temperature of the suspension to Tm or more.

EP 1 739 102 A1

## Description

TECHNICAL FIELD

The present invention relates to a method for manufacturing coagulated particles from latex prepared by emulsion polymerization. In particular, the present invention relates to a method for manufacturing coagulated polymer particles having a volume-average particle size of 50 to 500 $\mu$m from latex prepared by emulsion polymerization.

BACKGROUND ART

Polymers prepared by emulsion polymerization are widely used as resin modifiers improving the processability of hard plastics and the quality of shaped products composed thereof, such as vinyl chloride resins, styrene resins, methyl methacrylate resins, and polycarbonate resins, by addition of small amounts of the polymers.

Granulating processes, which coagulate latices and then recover the resultant coagulum, are usually required in order to recover desired graft copolymers from latices prepared by emulsion polymerization. The granulating processes have significant effects on not only the powder properties, such as particle size distribution, fine particle content, and coarse particle content, of recovered particles, but also productivity in after treatments such as dehydration property and drying property. In general, a polymer is recovered in the form of particles from a polymer latex prepared by the emulsion polymerization by the following procedure: Water is added to the latex to adjust a polymer solid content to 10 percent by weight or less, and then a coagulant is added to the resulting mixture at a temperature sufficiently lower than the softening temperature of the polymer to form coagulated polymer particles. Next, the resulting mixture is heated to at least the softening temperature of the polymer to produce a slurry, followed by dehydrating and drying. In this way, a powdered polymer is recovered.

However, this process has the following problems: (I) Since the powdered polymer has no regular shape and contains a large amount of fine powder, troubles frequently occur during the process or a working environment becomes worse because of dust generation. (II) A greater amount of energy is consumed in the subsequent drying step due to the high water content of the resulting coagulated particles. (III) It is necessary to add a coagulant generally at a temperature sufficiently lower than the softening temperature of the polymer (usually, significantly lower than the polymerization temperature) and then to perform heat treatment again at a higher temperature, thus resulting in low energy efficiency. (IV) A large amount of water is used for reducing the solid content from 30 to 40 percent by weight, which is the solid content in typical polymerization, to 10 percent by weight or less, resulting in an increased load in waste water treatment. Therefore, various improved granulating processes such as a gas-phase coagulation (for example, see Patent Document 1) and slow coagulation (for example, see Patent Document 2) have been developed. In spite of such intensive efforts, such processes are unsatisfactory even now with respect to facility costs, energy savings, or the reduction of waste water; hence, the development of new granulating processes has been desired.

Furthermore, a new granulating process with a polymer coagulant to improve such circumstances is proposed (for example, see Patent Document 3). In this process, granulation is performed by adding an anionic polyacrylamide as a polymer coagulant and an inorganic salt to a latex prepared by emulsion polymerization. However, in this case, the latex after the polymerization is diluted with a large amount of water so that the solid content is 10 percent by weight or less in order to prepare satisfactory coagulated particles; hence, the process is unsatisfactory with respect to the load in waste water treatment. In addition, since the granulating process can be performed only at a relatively high temperature of 80°C or more independently of the state of latex prepared by emulsion polymerization, the process is also unsatisfactory with respect to energy consumption.

[Patent Document 1] JP 52-68285 A.
[Patent Document 2] JP 60-217224 A.
[Patent Document 3] JP 59-84922 A.

DISCLOSURE OF INVENTION

To solve the above-described problems, it is an object of the present invention to provide a new granulating method having the following advantages: (I) A low content of fine powder having a volume-average particle size of less than 50 $\mu$m; (II) low energy consumption during drying due to a low water content; (III) high energy efficiency due to a granulating operation that can be performed in the vicinity of the softening temperature of the polymer (in the vicinity of the polymerization temperature); and (IV) the reduction in the load in waste water treatment due to the granulating operation that can be performed at a solid content of 10 percent by weight or more.

In view of the above-described problems, the present inventors have conducted extensive studies, and found that coagulated particles can be efficiently manufactured from a latex prepared by emulsion polymerization according to the following procedure: A latex prepared by emulsion polymerization is maintained in a specific range of temperature. Polyethylene oxide is added to the latex with stirring, and if necessary, a coagulant is added to cause phase separation of a polymer component from an aqueous phase. A coagulant is further added to form an aqueous suspension of coagulated polymer particles. The temperature of the resulting aqueous suspension is adjusted to the softening temperature of the polymer or more. Consequently, the present invention has been accomplished.

The present invention relates to a method for manufacturing coagulated particles from a latex prepared by emulsion polymerization including step (A) of adjusting the temperature of a latex prepared by emulsion polymerization within the range of Tm ± 15°C wherein Tm represents the softening temperature of the polymer in the latex, the amount of the latex being 100 parts by weight on a polymer solid basis; step (B) of adding 0.03 to 3.0 parts by weight of polyethylene oxide while stirring; step (C) of adding 0 to 1.5 parts by weight of a coagulant to cause phase separation of a polymer component from an aqueous phase; step (D) of further adding 0.2 to 10 parts by weight of a coagulant to form an aqueous suspension containing coagulated polymer particles having a volume-average particle size of 50 to 500 $\mu$m; and step (E) of adjusting the temperature of the suspension to Tm or more.

A preferred embodiment of the present invention relates to the method described above further including a step of adding 0.01 to 3.0 parts by weight of a nonionic surfactant other than polyethylene oxide based on 100 parts by weight of the polymer solid content at latest before the step (D) of adding the coagulant.

According to another preferred embodiment of the present invention, the method described in any one of the embodiments of the present invention is characterized in that the polymer in the latex prepared by emulsion polymerization has a volume-average particle size of 0.05 to 0.5 $\mu$m.

According to another preferred embodiment of the present invention, the method described in any one of the embodiments of the present invention is characterized in that the latex prepared by emulsion polymerization has a polymer solid content of 10 to 35 percent by weight.

According to another preferred embodiment of the present invention, the method described in any one of the embodiments of the present invention is characterized in that the temperature of the latex prepared by emulsion polymerization is adjusted within the range of Tm ±10°C wherein Tm represents the softening temperature of the polymer.

According to another preferred embodiment of the present invention, the method described in any one of the embodiments of the present invention is characterized in that a 0.01 to 10 percent by weight aqueous solution of polyethylene oxide that has a viscosity-average molecular weight of 600,000 to 8,000,000 is added in an amount of 0.05 to 2.0 parts by weight based on 100 parts by weight of the polymer on a solid basis.

According to another preferred embodiment of the present invention, the method described in any one of the embodiments of the present invention is characterized in that a 0.01 to 10 percent by weight aqueous solution of a nonionic surfactant other than polyethylene oxide is added in an amount of 0.05 to 2.0 parts by weight based on 100 parts by weight of the polymer on a solid basis.

According to another preferred embodiment of the present invention, the method described in any one of the embodiments of the present invention is characterized in that the coagulant is an aqueous solution of a monovalent or divalent inorganic salt and/or an inorganic acid.

According to another preferred embodiment of the present invention, the method described in any one of the embodiments of the present invention is characterized in that the polymer latex prepared by emulsion polymerization is prepared by polymerization of 50 to 100 percent by weight of an acrylic acid ester, 0 to 40 percent by weight of an aromatic vinyl monomer, 0 to 10 percent by weight of a vinyl monomer copolymerizable with the acrylic acid ester and the aromatic vinyl monomer, and 0 to 5 percent by weight of a multi-functional monomer to form a rubber latex having a glass transition temperature of 0°C or less; and then graft polymerization of 50 to 95 parts by weight, on a solid basis, of the rubber latex with 5 to 50 parts by weight of a monomer mixture containing 10 to 100 percent by weight of a methacrylic acid ester, 0 to 90 percent by weight of an aromatic vinyl monomer, 0 to 25 percent by weight of a vinyl cyanide monomer, and 0 to 20 percent by weight of a vinyl monomer copolymerizable with the methacrylic acid ester, the aromatic vinyl monomer, and the vinyl cyanide monomer.

According to another preferred embodiment of the present invention, the method described in any one of the embodiments of the present invention is characterized in that the polymer latex prepared by emulsion polymerization is prepared by emulsion polymerization of 60 to 95 parts by weight of a mixture containing 50 to 95 percent by weight of methyl methacrylate, 5 to 50 percent by weight of a methacrylic acid ester having a $C_{2-8}$ alkyl group, and 0 to 20 percent by weight of a vinyl monomer copolymerizable with the methyl methacrylate and the methacrylic acid ester; and then polymerizing, in the presence of the resulting polymer latex, 5 to 40 parts by weight of a mixture containing 20 to 80 percent by weight of methyl methacrylate, 20 to 80 percent by weight of at least one monomer selected from acrylic acid esters and methacrylic acid esters other than methyl methacrylate, and 0 to 20 percent by weight of a vinyl monomer copolymerizable with the foregoing monomers, the total of the two mixtures being 100 parts by weight.

According to another preferred embodiment of the present invention, the method described in any one of the embodiments of the present invention is characterized in that the polymer latex prepared by emulsion polymerization is prepared by polymerization of 50 to 100 percent by weight of butadiene, 0 to 40 percent by weight of an aromatic vinyl monomer, 0 to 10 percent by weight of a vinyl monomer copolymerizable with butadiene and the aromatic vinyl monomer, and 0 to 5 percent by weight of a multi-functional monomer to form a rubber latex having a glass transition temperature of 0°C or less; and then graft polymerization of 50 to 95 parts by weight, on a solid basis, of the rubber latex with 5 to 50 parts by weight of a monomer mixture containing 10 to 100 percent by weight of a methacrylic acid ester, 0 to 90 percent by weight of an aromatic vinyl monomer, 0 to 25 percent by weight of a vinyl cyanide monomer, and 0 to 20 percent by weight of a vinyl monomer copolymerizable with the methacrylic acid ester, the aromatic vinyl monomer, and the vinyl cyanide monomer.

The method according to the present invention for manufacturing coagulated particles from latex prepared by emulsion polymerization provides a granulating operation having the following excellent effects compared with conventional granulating processes such as salting-out techniques: (I) A low content of fine powder having a volume-average particle size of less 50 μm; (II) low energy consumption during drying due to a low water content; (III) high energy efficiency due to a granulating operation that can be performed in the vicinity of the softening temperature of the polymer (in the vicinity of the polymerization temperature); and (IV) a reduction in load in waste water treatment due to the granulating operation that can be performed at a solid content of 10 percent by weight or more.

BEST MODE FOR CARRYING OUT THE INVENTION

In the present invention, polymer particles in a latex prepared by emulsion polymerization are not particularly limited and any ones of those prepared by the following procedures are preferably employed for the reason mentioned below: (1) Polymer latex prepared by polymerization of 50 to 100 percent by weight of an acrylic acid ester, 0 to 40 percent by weight of an aromatic vinyl monomer, 0 to 10 percent by weight of a vinyl monomer copolymerizable with the acrylic acid ester and the aromatic vinyl monomer, and 0 to 5 percent by weight of a multi-functional monomer to form a rubber latex having a glass transition temperature of 0°C or less, and then graft polymerization of 50 to 95 parts by weight, on a solid basis, of the rubber latex with 5 to 50 parts by weight of a monomer mixture containing 10 to 100 percent by weight of a methacrylic acid ester, 0 to 90 percent by weight of an aromatic vinyl monomer, 0 to 25 percent by weight of a vinyl cyanide monomer, and 0 to 20 percent by weight of a vinyl monomer copolymerizable with the methacrylic acid ester, the aromatic vinyl monomer, and the vinyl cyanide monomer; (2) Polymer latex prepared by emulsion polymerization of 60 to 95 parts by weight of a mixture containing 50 to 95 percent by weight of methyl methacrylate, 5 to 50 percent by weight of a methacrylic acid ester having a $C_{2-8}$ alkyl group, and 0 to 20 percent by weight of a vinyl monomer copolymerizable with the methyl methacrylate and the methacrylic acid ester, and then polymerization of, in the presence of the resulting polymer latex, 5 to 40 parts by weight of a mixture containing 20 to 80 percent by weight of methyl methacrylate, 20 to 80 percent by weight of at least one monomer selected from acrylic acid esters and methacrylic acid esters other than methyl methacrylate, and 0 to 20 percent by weight of a vinyl monomer copolymerizable with the foregoing monomers, the total amount of the two mixtures being 100 parts by weight; or (3) Polymer latex prepared by polymerization of 50 to 100 percent by weight of butadiene, 0 to 40 percent by weight of an aromatic vinyl monomer, 0 to 10 percent by weight of a vinyl monomer copolymerizable with butadiene and the aromatic vinyl monomer, and 0 to 5 percent by weight of a multi-functional monomer to form a rubber latex having a glass transition temperature of 0°C or less, and then graft polymerization of 50 to 95 parts by weight, on a solid basis, of the rubber latex with 5 to 50 parts by weight of a monomer mixture containing 10 to 100 percent by weight of a methacrylic acid ester, 0 to 90 percent by weight of an aromatic vinyl monomer, 0 to 25 percent by weight of a vinyl cyanide monomer, 0 to 20 percent by weight of a vinyl monomer copolymerizable with the methacrylic acid ester, the aromatic vinyl monomer, and the vinyl cyanide monomer.

Typical processes for manufacturing such polymer particles in latices prepared by emulsion polymerization according to the above-described procedures (1) to (3) are disclosed in detail in, but are not limited to, JP 2-269755 A and JP 8-217817 A.

The polymer particles prepared by the procedures (1) to (3) are preferably used for the reason that such polymer particles, which have been widely used as a quality modifier for thermoplastic resins can express their various effects of improving quality even when the polymer particles are recovered according to the method of the present invention. However, polymer particles in latex prepared by emulsion polymerization according to the present invention are not limited to the above-mentioned. For example, polymer particles in latex prepared by copolymerization or graft polymerization of a monomer composition principally composed of at least one selected from the following monomer groups may be used alone or as a mixture. Examples of the monomer groups include (1) alkyl acrylates containing an alkyl group having up to 10 carbon atoms, for example, methyl acrylate, ethyl acrylate, butyl acrylate, and 2-ethylhexyl acrylate; (2) alkyl methacrylates containing an alkyl group having up to 10 carbon atoms, for example, methyl methacrylate, ethyl methacrylate, butyl methacrylate, and 2-ethylhexyl methacrylate; (3) vinyl arenes such as styrene, α-methylstyrene, monochlorostyrene, and dichlorostyrene; (4) vinyl carboxylic acids such as acrylic acid and methacrylic acid; (5) vinyl cyanides such as acrylonitrile and methacrylonitrile; (6) vinyl halides such as vinyl chloride, vinyl bromide, and chloroprene; (7) vinyl acetate; (8) alkenes such as ethylene, propylene, butylene, butadiene, and isobutylene; and (9) multi-functional monomers such as allyl methacrylate, diallyl phthalate, triallyl cyanurate, monoethylene glycol dimethacrylate, tetraethylene glycol dimethacrylate, divinylbenzene, and glycidyl methacrylate.

The polymer particles preferably have, but are not limited to, a volume-average particle size of 0.05 to 0.5 $\mu$m, which is the particle size in typical emulsion polymerization. The volume-average particle size of the polymer particles can be measured by, for example, MICROTRAC UPA (manufactured by NIKKISO CO., LTD.).

Latex prepared by emulsion polymerization according to the present invention preferably has, but is not limited as long as an object of the present invention is achieved, a solid content of 10 to 35 percent by weight, more preferably 12 to 30 percent by weight. When the latex prepared by emulsion polymerization has a solid content of less than 10 percent by weight, a large amount of water is needed to reduce the solid content from 30 to 40 percent by weight, which is the solid content in typical emulsion polymerization, to 10 percent by weight or less, thus increasing the load in waste water treatment. On the other hand, when the latex prepared by emulsion polymerization has a solid content of more than 35 percent by weight, the viscosity of the system may be extremely increased by addition of polyethylene oxide to preclude stirring and mixing operations and the like. The solid content of the latex may be measured by placing 0.5 g of latex in a hot-air convection dryer at 120°C for 3 hours to evaporate water and then calculating the solid content in the latex from the weights of latex before drying and dried polymer.

In the present invention, the temperature of latex prepared by emulsion polymerization is preferably adjusted within the range of Tm $\pm$ 15°C, more preferably Tm $\pm$ 10°C with respect to the softening temperature (hereinafter, referred to as "Tm") of the polymer. It is not desirable that the temperature of latex prepared by emulsion polymerization is less than (Tm - 15)°C because the content of coagulated particles having a particle size of less than 50 $\mu$m may be increased. On the other hand, it is not desirable that the temperature of latex prepared by emulsion polymerization is more than (Tm + 15)°C because the content of coarse particles having a particle size significantly deviating from the desired particle size may be increased. The term "softening temperature of polymer" means a temperature at which an aqueous suspension containing coagulated polymer particles produced by a salting-out technique is heated such that the water content of the coagulated polymer particles after the heat treatment is by at least 5 percent by weight lower than that of the coagulated polymer particles before the heat treatment. The softening temperature of a polymer according to the present invention is measured as follows: Dialysis tubes are filled with a latex prepared by emulsion polymerization, and both ends of each of the dialysis tubes are tied. The dialysis tubes are immersed in an aqueous solution containing 5 percent by weight of calcium chloride at 20°C for 5 hours to form tubular coagula completely coagulated. The resulting tubular coagula are heated in hot water in the range of 30°C to 99°C with an increment of 5°C for 10 minutes. Each of the tubular coagula heated at each temperature is dried in a hot-air convection dryer to evaporate water. The water content of each tubular coagulum is determined from the weights of the tubular coagulum before the drying and after the drying. A temperature for the heat treatment by which the water content of the polymer particles after the heat treatment is decreased by at least 5 percent by weight lower than that of the polymer particles before the heat treatment is defined as the softening temperature (Tm) of the polymer.

In the present invention, polyethylene oxide may be added to the latex prepared by emulsion polymerization in the form of an aqueous solution or in a neat form, for example, a powder. In general, addition of polyethylene oxide in an aqueous solution form is preferable due to its easy operation. The aqueous polyethylene oxide solution preferably has, but is not limited to, a concentration of 0.01 to 10 percent by weight. When the concentration of the aqueous solution is less than 0.01 percent by weight, a large amount of the aqueous solution is needed in order to add a predetermined amount of polyethylene oxide. On the contrary, when the concentration of the aqueous solution is more than 10 percent by weight, it tends to be difficult to handle because of the high viscosity of the aqueous polyethylene oxide solution.

Polyethylene oxide used in the present invention preferably has, but is not limited to, a viscosity-average molecular weight of 600,000 to 8,000,000, more preferably 1,500,000 to 5,000,000. When the viscosity-average molecular weight is less than 600,000, even if polyethylene oxide is added to a latex prepared by emulsion polymerization, a flocculated state is not formed; therefore, an object of the present invention sometimes cannot be achieved. On the other hand, when the viscosity-average molecular weight is more than 8,000,000, the viscosity may be extremely increased by addition of polyethylene oxide to the latex prepared by emulsion polymerization to preclude stirring and mixing operations. The term "flocculated state of latex prepared by emulsion polymerization" means a state in which the viscosity of the system is increased by cross-linking the particles in the latex with the molecular chain of polyethylene oxide and the viscosity of the system is increased at least two times that before polyethylene oxide is added. The viscosity-average molecular weight of polyethylene oxide is measured with a benzene solvent at 20°C.

Polyethylene oxides used in the present invention are preferably polymeric compounds having ethylene oxide units produced by polymerization of ethylene oxide, and include, for example, polyethylene oxide, ethylene oxide adducts of higher alcohols, ethylene oxide adducts of alkylphenols, ethylene oxide adducts of fatty acids, ethylene oxide adducts of fatty acid esters with polyvalent alcohols, ethylene oxide adducts of higher alkylamines, ethylene oxide adducts of fatty acid amides, ethylene oxide adducts of oils and fats, and ethylene oxide adducts of polypropylene glycols.

Operations for adding polyethylene oxide include, but are not limited to, a single step addition, a stepwise addition, or continuous addition of a predetermined amount of polyethylene oxide to a latex.

The amount of polyethylene oxide added is preferably 0.03 to 3.0 parts by weight (300 to 30,000 ppm), more preferably 0.05 to 2 parts by weight based on 100 parts by weight, on a solid basis, of the polymer prepared by emulsion polymerization. Addition of polyethylene oxide in an amount of less than 0.03 part by weight tends to make it difficult to cause phase separation of the flocculated polymer component from an aqueous phase, and subsequent addition of a coagulant readily forms coarse particles or, in the worst case, the system becomes a mass; hence, an object of the present invention sometimes cannot be achieved. On the other hand, when the amount of polyethylene oxide added is more than 3.0 parts by weight, it has no significant influence on a behavior in subsequent granulation. However, it is undesirable because the production cost is high and there is no significant difference with respect to the effects of reducing water content and fine particle content compared with when 0.03 to 3.0 parts by weight of polyethylene oxide is added.

In the present invention, a flocculated state composed of three components, i.e., polymer particles prepared by emulsion polymerization, polyethylene oxide, and water is formed during or after the addition of polyethylene oxide to latex prepared by emulsion polymerization. Maintaining stirring at the same temperature or adding 0 to 1.5 parts by weight of a coagulant (C) induces separation of water from the flocculated polymer component to cause phase separation of the flocculated polymer component from an aqueous phase. By further adding 0.2 to 10 parts by weight of a coagulant (D), water is further separated from the flocculated polymer component to form an aqueous suspension containing coagulated polymer particles finally.

In the present invention, the amount of coagulant (C) added for separating water from the flocculated polymer component to cause phase separation of the flocculated polymer component from the water phase is preferably 0 to 1.5 parts by weight. The formation of the phase separation depends on the volume-average particle size of latex prepared by emulsion polymerization. For a volume-average particle size of 0.1 $\mu$m or less, about 0.2 to 1.5 parts by weight of the coagulant (C) is preferably added. For a volume-average particle size of 0.1 $\mu$m or more, about 0 to 1.0 part by weight of the coagulant (C) is preferably added.

In the present invention, the amount of coagulant (D) added for forming an aqueous suspension containing the coagulated polymer particles from the phase separated state of the flocculated polymer component and the aqueous phase is preferably 0.2 to 10 parts by weight. An amount of coagulant (D) added of less than 0.2 part by weight is undesirable because the subsequent dehydrating operation is difficult due to the remaining flocculated component. An amount of coagulant (D) added of more than 10 parts by weight is also undesirable because the content of a residual metal salt is increased in the recovered coagulated polymer particles to adversely affect quality such as heat resistance.

Each coagulant (C) and (D) used in the present invention may be an aqueous solution of an inorganic acid (salt) and/or an aqueous solution of an organic acid (salt) that can coagulate a latex prepared by emulsion polymerization. Examples of the coagulants include aqueous solutions of inorganic salts such as sodium chloride, potassium chloride, lithium chloride, sodium bromide, potassium bromide, lithium bromide, potassium iodide, sodium iodide, potassium sulfate, sodium sulfate, ammonium sulfate, ammonium chloride, sodium nitrate, potassium nitrate, calcium chloride, iron (II) sulfate, magnesium sulfate, zinc sulfate, copper sulfate, barium chloride, iron(II) chloride, iron(III) chloride, magnesium chloride, iron(III) sulfate, aluminum sulfate, potassium alum, and iron alum; aqueous solutions of inorganic acids such as hydrochloric acid, sulfuric acid, nitric acid, and phosphoric acid; organic acids such as acetic acid and formic acid and aqueous solutions of the organic acids; and aqueous solutions of organic acid salts such as sodium acetate, calcium acetate, sodium formate, and calcium formate, which may be used alone or in combination. Among these compounds, preferably used are aqueous solutions of monovalent or divalent inorganic salts or inorganic acids, for example, sodium chloride, potassium chloride, sodium sulfate, ammonium chloride, calcium chloride, magnesium chloride, magnesium sulfate, barium chloride, hydrochloric acid, and sulfuric acid. Operations for adding the coagulants include, but are not limited to, a single step addition, a stepwise addition, or continuous addition.

In the present invention, a step of coagulating a polymer prepared by emulsion polymerization is preferably performed in the presence of 0.01 to 3.0 parts by weight, preferably 0.05 to 2.0 parts by weight of a nonionic surfactant other than polyethylene oxide based on 100 parts by weight, on a solid basis, of the polymer of latex prepared by emulsion polymerization.

Examples of the nonionic surfactants other than polyethylene oxide include nonionic surfactants composed of natural products or synthetic polymers, for example, starch, gelatin, partially saponified poly(vinyl alcohol), partially saponified poly(methyl methacrylate), polyacrylic acid and its salt, cellulose, methyl cellulose, hydroxymethyl cellulose, hydroxyethyl cellulose, poly(vinyl pyrrolidone), poly(vinylimidazole), and sulfonated polystyrene, which may be used alone or in combination. Among these compounds, partially saponified poly(vinyl alcohol), cellulose, methyl cellulose, hydroxymethyl cellulose, and hydroxyethyl cellulose are preferable. Partially saponified poly(vinyl alcohol) is more preferably used for efficiently achieving an object of the present invention.

The main purpose of making such a nonionic surfactant coexist during coagulating a polymer prepared by emulsion polymerization is to suppress the formation of coarse coagulated particles. In the present invention, coarse coagulated particles are readily formed by coagulating treatment of emulsion polymerization latex having a high polymer solid content. For an emulsion polymerization latex having a polymer solid content of 20 to 35 percent by weight, the above-described suppressing effect is readily achieved by the presence of a nonionic surfactant during coagulating treatment. Addition of the nonionic surfactant in an amount of less than 0.01 part by weight tends to make it difficult to achieve the effect of suppressing the formation of coarse coagulated particles. On the other hand, an amount of nonionic surfactant added of more than 3.0 parts by weight is undesirable because the amount of nonionic surfactant remaining in recovered coagulated polymer particles is increased to adversely affect quality, for example, heat resistance.

The order of the addition of such a nonionic surfactant is not particularly limited. To readily achieve the desired effect, the nonionic surfactant is preferably added to the system before coagulant (D) is added. The nonionic surfactant may be added to the system, for example, before or after the temperature of latex prepared by emulsion polymerization is adjusted; or before, during, or after polyethylene oxide is added. Alternatively, the nonionic surfactant may be added after coagulant (C) is added. Among these cases, to easily achieve the effect of suppressing the formation of coarse coagulated particles, the nonionic surfactant is more preferably added to the system after polyethylene oxide is added.

Such a nonionic surfactant may be added, but is not limited to, in the form of an aqueous solution or in a neat form, for example, a powder. The nonionic surfactant is preferably added in the form of an aqueous solution due to its easy operation. The aqueous nonionic surfactant solution preferably has, but is not limited to, a concentration of 0.01 to 10 percent by weight. When the aqueous solution has a concentration of less than 0.01 percent by weight, a large amount of the solution is required to add a predetermined amount of the nonionic surfactant. For the aqueous solution having a concentration of more than 10 percent by weight, the viscosity of the the aqueous solution may be increased to preclude handling. Operations for adding the nonionic surfactant include, but are not limited to, a single step addition, a stepwise addition, or a continuous addition.

Coagulated polymer particles obtained according to the present invention preferably have a volume-average particle size of 50 to 500 $\mu$m. A volume-average particle size of less than 50 $\mu$m is undesirable because the amount of the outflow of fine particles into the waste water during dehydration is markedly increased. A volume-average particle size of more than 500 $\mu$m (including a volume-average particle size of polymer particles obtained by multi-stage coagulation wherein the desired coagulated polymer particles are further coagulated) is also undesirable because of a long drying time due to a high water content after dehydration. Within the scope of the present invention, the particle size of coagulated polymer particles tends to decrease with a reduction in temperature or with vigorous stirring. These conditions are preferably adjusted so as to form coagulated polymer particles having a desired particle size within the scope of the present invention. The volume-average particle size of coagulated polymer particles may be measured with MICROTRAC FRA-SVRSC (manufactured by NIKKISO CO., LTD.).

In step (E) of the present invention after an aqueous suspension of coagulated polymer particles is produced, the temperature of the aqueous suspension is preferably adjusted to at least the softening temperature (Tm) of the polymer to accelerate the melt-adhesion between polymer particles in the coagulated particles. The upper limit of the temperature for the heat treatment is, but is not set, preferably 120°C or less due to its easy operation. This heat treatment increases mechanical strength of the coagulated polymer particles and reduces the water content in the coagulated polymer particles. In the present invention, when a granulating operation is performed at a temperature of at least the softening temperature (Tm) of the polymer, this step (E) can be omitted because the temperature has already been adjusted. In the heat treatment, known treatment for preventing melt-adhesion between particles may be performed for suppressing the aggregation between particles during heat treatment and during or after drying.

By subsequent dehydration and drying according to a common procedure, coagulated polymer particles from latex prepared by emulsion polymerization according to the present invention may be recovered.

EXAMPLES

The present invention will now be described in detail based on Examples. The present invention is not limited to these Examples.

(Measurement of water content after dehydration)

After 100 g (solid content: 5 to 38 percent by weight) of a suspension containing coagulated particles prepared in each of Examples, Comparative Examples, or Reference Example was filtered by suction filtration with an aspirator for 3 minutes, the dehydrated resin was recovered and dried at 100°C for 12 hours in a hot-air convection dryer to evaporate water. The water content after dehydration was determined by Formula 1:

$$\text{Water content after dehydration (\%)} = [(Ww-Wd)/Ww]\times100 \qquad (1)$$

where Ww represents the weight of the resin immediately after dehydration and before drying; and Wd represents the weight of the dried resin.

(Measurement of content of finely powdered polymer component)

The particle-size distribution of coagulated particles in a suspension prepared in each of Examples, Comparative Examples, or Reference Example was measured with MICROTRAC FRA-SVRSC (manufactured by NIKKISO CO., LTD.), and then the content of the particles having a particle size of less than 50 μm was determined from the cumulative frequency (%). (Measurement of content of coarse coagulated polymer particles)

After 1,000 g (solid content: 8 to 38 percent by weight) of a suspension containing coagulated particles prepared in each of Examples, Comparative Examples, or Reference Example was filtered by suction filtration with an aspirator, the dehydrated resin was recovered and dried at 50°C for 24 hours in a hot-air convection dryer to evaporate water. The resulting dried particles were classified with a 16-mesh screen. The content of the coarse coagulated polymer particles was determined by Formula 2:

$$\text{Content of coarse coagulated polymer particles (\%)} =$$

$$[(W1)/(W1+W2)]\times 100 \qquad (2)$$

where W1 represents the weight of the dried particles remained on the 16-mesh screen; and W2 represents the weight of the dried particles passing through the 16-mesh screen.

(Measurement of softening temperature (Tm) of polymer)

Each dialysis tube (SPECTRA BIOTECH MEMBRANE/PORE 1.1, MWCO 8000, 16 mm, manufactured by Funakoshi Co., Ltd.) of which one end was tied was charged with 10 g of a latex prepared by emulsion polymerization, and then another end was tied so as to be formed in the form of a sausage shape. The resulting dialysis tubes were immersed in 3,000 g of an aqueous solution containing 5 percent by weight of calcium chloride at 20°C for 5 hours to form tubular coagula completely coagulated. The resulting tubular coagula were heated in hot water at 30°C to 99°C with an increment of 5°C for 10 minutes. Each heated tubular coagulum at each temperature was dried in a hot-air convection dryer at 100°C for 12 hours to evaporate water. The water content was determined by Formula 3:

$$\text{Water content (\%)} = [(Wa-Wb)/Wa]\times 100 \qquad (3)$$

where Wa represents the weight of the tubular coagulum before drying; and Wb represents the weight of the tubular coagulum after drying. A temperature for the heat treatment by which the water content of the polymer particles after the heat treatment was decreased by at least 5 percent by weight lower than that of the polymer particles before the heat treatment was defined as the softening temperature (Tm) of the polymer.

Hereinafter, the terms "part" and "%" used in Examples, Comparative Examples, and Reference Example mean "parts by weight" and "percent by weight", respectively. The term "average particle size" used in Examples, Comparative Examples, and Reference Example means "volume-average particle size".

EXAMPLE 1

To a glass reactor equipped with a thermometer, a stirrer, a reflux condenser, an inlet for a nitrogen gas, and a device for adding a monomer and an emulsifier were fed 124 parts of distilled water and 0.035 part of sodium lauryl sulfate and heated to 50°C with stirring in a nitrogen flow. A mixture of 11.20 parts of butyl acrylate (hereinafter, referred to as "BA"), 1.25 parts of 2-ethylhexyl acrylate (hereinafter, referred to as "2-EHA"), 0.06 part of allyl methacrylate (hereinafter, referred to as "AMA"), and 0.01 part of cumene hydroperoxide was fed. After 10 minutes, a solution containing 0.2 part of sodium formaldehyde sulfoxylate dissolved in 5 parts of distilled water, and a mixture solution containing 0.01 part of disodium ethylenediaminetetraacetate and 0.005 part of iron(II) sulfate heptahydrate dissolved in 5 parts of distilled water were fed. After the resulting mixture was stirred for 1 hour, a monomer mixture containing 68.51 parts of BA, 7.61 parts of 2-EHA, 0.38 part of AMA, and 0.1 part of cumene hydroperoxide was added dropwise to the resulting mixture over a period of 4 hours. Furthermore, an aqueous solution containing 5 % sodium lauryl sulfate (corresponding to 1 part) was continuously added over a period of 4 hours during the addition of the monomer mixture. After the addition of the monomer mixture, stirring was continued for 1.5 hours to yield a cross-linked acrylic rubber polymer. A mixture containing monomer components used for graft polymerization, containing 10.45 parts of methyl methacrylate (hereinafter, referred to as "MMA"), 0.55 part of BA, and 0.01 part of cumene hydroperoxide was continuously added to the resulting cross-linked acrylic rubber polymer at 50°C over a period of 1 hour. After the addition, 0.01 part of cumene hydroperoxide was added and stirring was continued for 2 hours to complete polymerization. As a result, latex A having a volume-average particle size of 0.175 $\mu$m and having a polymer solid content of 40 % was prepared, the softening temperature of the polymer being 40°C.

To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes, and subsequently 10 g (0.75 part) of an aqueous solution containing 15 % sodium sulfate was added. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 2

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 250 g of latex A prepared by emulsion polymerization (amount of polymer: 100 parts on a solid basis) and 750 g of deionized water, and the resulting mixture was maintained at 40°C (polymer solid content: 10 %). With stirring, 20 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 1.5 minutes, and subsequently 5 g (0.75 part) of an aqueous solution containing 15 % sodium sulfate was added. At this time, the system was separated into two phases of flocculated polymer component and an aqueous phase. To the resulting mixture was added 5 g (0.75 part) of an aqueous solution containing 15 % calcium chloride to yield an aqueous suspension of coagulated polymer particles. To prevent melt-adhesion between the coagulated polymer particles, 20 g (1.0 part) of an aqueous solution containing 5 % potassium palmitate was added, and then heat treatment was performed at 80°C.

EXAMPLE 3

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 750 g of latex A prepared by emulsion polymerization (amount of polymer: 100 parts on a solid basis) and 250 g of deionized water, and the resulting mixture was maintained at 40°C (polymer solid content: 30 %). With stirring, 60 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 5 minutes, and subsequently 15 g (0.75 part) of an aqueous solution containing 15 % sodium sulfate was added. At this time, the system was separated into two phases of flocculated polymer component and an aqueous phase. To the resulting mixture was added 15 g (0.75 part) of an aqueous solution containing 15 % calcium chloride to yield an aqueous suspension of coagulated polymer particles. To prevent melt-adhesion between the coagulated polymer particles, 60 g (1.0 part) of an aqueous solution containing 5 % potassium palmitate was added, and then heat treatment was performed at 80°C.

EXAMPLE 4

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 875 g of latex A prepared by emulsion polymerization (amount of polymer: 100 parts on a solid basis) and 125 g of deionized water, and the resulting mixture was maintained at 40°C (polymer solid content: 35 %). With stirring, 70 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 7 minutes, and subsequently 17.5 g (0.75 part) of an aqueous solution containing 15 % sodium sulfate was added. At this time, the system was separated into two phases of flocculated polymer component and an aqueous phase. To the resulting mixture was added 17.5 g (0.75 part) of an aqueous solution containing 15 % calcium chloride to yield an aqueous suspension of coagulated polymer particles. To prevent melt-adhesion between the coagulated polymer particles, 70 g (1.0 part) of an aqueous solution containing 5 % potassium palmitate was added, and then heat treatment was performed at 80°C.

EXAMPLE 5

Latex A prepared by emulsion polymerization (volume-average particle size: 0.175 μm, polymer solid content: 40 %, and softening temperature of the polymer: 40°C) was prepared in the same manner as in EXAMPLE 1.
To a 2 L separable flask were added 500 g of latex A prepared by emulsion polymerization (amount of polymer: 100 parts on a solid basis) and 500 g of deionized water, and the resulting mixture was maintained at 25°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes, and subsequently 10 g (0.75 part) of an aqueous solution containing 15 % sodium sulfate was added. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 6

Latex A prepared by emulsion polymerization (volume-average particle size: 0.175 μm, polymer solid content: 40 %, and softening temperature of the polymer: 40°C) was prepared in the same manner as in EXAMPLE 1.
To a 2 L separable flask were added 500 g of latex A prepared by emulsion polymerization (amount of polymeri: 100 parts on a solid basis) and 500 g of deionized water, and the resulting mixture was maintained at 55°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes, and subsequently 10 g (0.75 part) of an aqueous solution containing 15 % sodium sulfate was added. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then the resulting mixture was stirred at 55°C for 5 minutes.

EXAMPLE 7

Latex A prepared by emulsion polymerization (volume-average particle size: 0.175 μm, polymer solid content: 40 %, and softening temperature of the polymer: 40°C) was prepared in the same manner as in EXAMPLE 1.
To a 2 L separable flask were added 775 g of latex A prepared by emulsion polymerization (amount of polymer: 100 parts on a solid basis) and 225 g of deionized water, and the resulting mixture was maintained at 40°C (polymer solid content: 31 %). With stirring, 93 g (0.3 part) of an aqueous solution containing 1 % polyethylene oxide (PEO-3Z, viscosity-average molecular weight: 600,000 to 1,100,000, manufactured by Sumitomo Seika Chemicals Company Limited) was continuously added to the resulting mixture over a period of 9 minutes, and subsequently 15.5 g (0.75 part) of an aqueous solution containing 15 % sodium sulfate was added. At this time, the system was separated into two phases of flocculated polymer component and an aqueous phase. To the resulting mixture was added 15.5 g (0.75 part) of an aqueous solution containing 15 % calcium chloride to yield an aqueous suspension of coagulated polymer particles. To prevent melt-adhesion between the coagulated polymer particles, 62 g (1.0 part) of an aqueous solution containing 5 % potassium palmitate was added, and then heat treatment was performed at 80°C.

EXAMPLE 8

Latex A prepared by emulsion polymerization (volume-average particle size: 0.175 μm, polymer solid content: 40 %, and softening temperature of the polymer: 40°C) was prepared in the same manner as in EXAMPLE 1.
To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 20 g (0.05 part) of an aqueous solution containing 0.5 % polyethylene oxide (PEO-18Z, viscosity-average molecular weight: 4,300,000 to 4,800,000, manufactured by Sumitomo Seika Chemicals Company Limited) was continuously added to the resulting mixture over a period of 1.5 minutes, and subsequently 10 g (0.75 part) of an aqueous solution containing 15 % sodium sulfate was added. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 9

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 20 g (0.05 part) of an aqueous solution containing 0.5 % polyethylene oxide (PEO-27, viscosity-average molecular weight: 6,000,000 to 8,000,000, manufactured by Sumitomo Seika Chemicals Company Limited) was continuously added to the resulting mixture over a period of 1.5 minutes, and subsequently 10 g (0.75 part) of an aqueous solution containing 15 % sodium sulfate was added. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 10

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 600 g (3.0 parts) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 30 minutes, and subsequently 10 g (0.75 part) of an aqueous solution containing 15 % sodium sulfate was added. At this time, the system was separated into two phases of flocculated polymer component and an aqueous phase. To the resulting mixture was added 40 g (3.0 parts) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 11

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 12

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer:

100 parts on a solid basis) and 500 g of deionized water, and the resulting mixture was maintained at 40°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes. At this time, the system was separated into two phases of flocculated polymer component and an aqueous phase. To the resulting mixture was added 4 g (0.30 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 13

Latex A prepared by emulsion polymerization (volume-average particle size: 0.175 μm, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes. At this time, the system was separated into two phases of flocculated polymer component and an aqueous phase. To the resulting mixture was added 133 g (10 parts) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added, and then heat treatment was performed at 80°C.

EXAMPLE 14

To a reactor equipped with a stirrer were fed 200 parts of deionized water, 0.08 part of potassium palmitate, and 0.01 part of sodium sulfate, and then a nitrogen gas was introduced into the reactor and the resulting mixture was heated to 70°C. To the resulting mixture was added 0.1 part of potassium persulfate followed by stirring for 30 minutes. Then a monomer mixture containing 80 parts of methyl methacrylate and 20 parts of butyl acrylate was continuously added over a period of 4 hours. During the addition, 0.4 part of potassium palmitate was each added at 30, 60, 90, and 120 minutes after the addition of the monomer mixture was started. After the addition of the monomer mixture, the resulting mixture was maintained at the same temperature for 1.5 hours to complete polymerization, thus yielding latex B by emulsion polymerization (volume-average particle size: 0.138 μm, polymer solid content: 32 %, and softening temperature of the polymer: 70°C).

To a 2 L separable flask were added 500 g of latex B prepared by emulsion polymerization (amount of polymer: 100 parts on a solid basis) and 500 g of deionized water, and the resulting mixture was maintained at 75°C (polymer solid content: 16 %). With stirring, 32 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes. At this time, the system was separated into two phases of flocculated polymer component and an aqueous phase. To the resulting mixture was added 8 g (0.75 part) of an aqueous solution containing 15 % calcium chloride to yield an aqueous suspension of coagulated polymer particles. Then heat treatment was performed at 95°C.

EXAMPLE 15

To a reactor equipped with a stirrer were fed 200 parts of deionized water, 0.3 part of potassium palmitate, and 0.01 part of sodium sulfate, and then a nitrogen gas was introduced into the reactor and the resulting mixture was heated to 70°C. To the resulting mixture was added 0.1 part of potassium persulfate followed by stirring for 30 minutes. Then a monomer mixture containing 80 parts of methyl methacrylate and 20 parts of butyl acrylate was continuously added over a period of 4 hours. During the addition, 0.4 part of potassium palmitate was each added at 30, 60, 90, and 120 minutes after the addition of the monomer mixture was started. After the addition of the monomer mixture, the resulting mixture was maintained at the same temperature for 1.5 hours to complete polymerization, thus yielding latex C by emulsion polymerization (volume-average particle size: 0.072 μm, polymer solid content: 32 %, and softening temperature of the polymer: 70°C).

To a 2 L separable flask were added 500 g of latex C prepared by emulsion polymerization (amount of polymer: 100 parts on a solid basis) and 500 g of deionized water, and the resulting mixture was maintained at 75°C (polymer solid content: 16 %). With stirring, 32 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes, and subsequently 8 g (0.75 part) of an aqueous solution containing 15 % sodium sulfate. At this time, the system was separated into two phases of flocculated polymer component and an aqueous phase. To the resulting mixture was added 8 g (0.75 part) of an aqueous solution containing 15 % calcium chloride to yield an aqueous suspension of coagulated polymer particles. Then heat treatment was performed at 95°C.

EXAMPLE 16

To a reactor equipped with a stirrer were fed 220 parts of deionized water, 0.3 part of boric acid, 0.03 part of sodium carbonate, 0.09 part of sodium N-lauroyl sarcosinate, 0.09 part of sodium formaldehyde sulfoxylate, 0.006 part of sodium ethylenediaminetetraacetate, and 0.002 part of iron(II) sulfate heptahydrate, and then a nitrogen gas was introduced into the reactor. Then, the reaction mixture was heated to 80°C. To the resulting mixture was fed a 25 % portion of a monomer mixture containing 25 parts of methyl methacrylate, 0.1 part of allyl methacrylate, and 0.1 part of t-butyl hydroperoxide in a single operation and polymerization was performed for 45 minutes. Subsequently, the remaining portion of the monomer mixture (75 % the initial amount) was continuously added over a period of 1 hour. After the addition, the resulting mixture was maintained at the same temperature for 2 hours to complete polymerization. During this period, 0.2 part of sodium N-lauroyl sarcosinate was added. The polymer particles in the resulting latex containing a cross-linked methacrylic polymer functioning as an innermost layer had a volume-average particle size of 0.160 $\mu$m. The rate of polymerization conversion determined by Formula: 100x(the amount of polymer produced)/(the amount of monomer fed) was 98 %. Subsequently, while the resulting latex containing a cross-linked methacrylic polymer was maintained at 80°C in a nitrogen flow, 0.1 part of potassium persulfate was added, and then a monomer mixture containing 41 parts of butyl acrylate, 9 parts of styrene, and 1 part of allyl methacrylate was continuously added over a period of 5 hours. During this addition, 0.1 part of potassium oleate was added three times. After the addition of the monomer mixture, 0.05 part of potassium persulfate was further added and the resulting mixture was maintained for 2 hours to complete the polymerization. The resulting polymer had a volume-average particle size of 0.230 $\mu$m, and the rate of polymerization conversion was 99 %. Subsequently, while the resulting rubber polymer latex was maintained at 80°C, 0.02 part of potassium persulfate was added, and then a mixture containing 24 parts of methyl methacrylate, 1 part of butyl acrylate, and 0.1 part of t-dodecyl mercaptan was continuously added over a period of 1 hour. After the addition of the monomer mixture, the resulting mixture was maintained for 1 hour to yield latex D containing particles having a multilayer structure and a volume-average particle size of 0.250 $\mu$m (volume-average particle size: 0.250 $\mu$m, polymer solid content: 33 %, and softening temperature of the polymer: 75°C) by emulsion polymerization.

To a 2 L separable flask were added 606 g of latex D prepared by emulsion polymerization (amount of polymer: 100 parts on a solid basis) and 394 g of deionized water, and the resulting mixture was maintained at 80°C (polymer solid content: 20 %). With stirring, 20 g (0.1 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. Then heat treatment was performed at 95°C.

EXAMPLE 17

Latex A prepared by emulsion polymerization (volume-average particle size: 0.175 $\mu$m, polymer solid content: 40 %, and softening temperature of the polymer: 40°C) was prepared in the same manner as in EXAMPLE 1.

To a 2 L separable flask were added 750 g of latex A prepared by emulsion polymerization (amount of polymer: 100 parts on a solid basis) and 250 g of deionized water, and the resulting mixture was maintained at 40°C (polymer solid content: 30 %). With stirring, 60 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 5 minutes, and then 25 g (0.25 part) of an aqueous solution containing 3 % poly(vinyl alcohol) (GH-20M, manufactured by The Nippon Synthetic Chemical Industry Co., Ltd.) was added. Subsequently 15 g (0.75 part) of an aqueous solution containing 15 % sodium sulfate was added. At this time, the system was separated into two phases of flocculated polymer component and an aqueous phase. To the resulting mixture was added 15 g (0.75 part) of an aqueous solution containing 15 % calcium chloride to yield an aqueous suspension of coagulated polymer particles. To prevent melt-adhesion between the coagulated polymer particles, 60 g (1.0 part) of an aqueous solution containing 5 % potassium palmitate was added, and then heat treatment was performed at 80°C.

EXAMPLE 18

Latex A prepared by emulsion polymerization (volume-average particle size: 0.175 μm, polymer solid content: 40 %, and softening temperature of the polymer: 40°C) was prepared in the same manner as in EXAMPLE 1.

To a 2 L separable flask were added 750 g of latex A prepared by emulsion polymerization (amount of polymer: 100 parts on a solid basis) and 250 g of deionized water, and the resulting mixture was maintained at 40°C (polymer solid content: 30 %). With stirring, 60 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 5 minutes, and then 5 g (0.05 part) of an aqueous solution containing 3 % poly(vinyl alcohol) (GH-20M, manufactured by The Nippon Synthetic Chemical Industry Co., Ltd.) was added. Subsequently 15 g (0.75 part) of an aqueous solution containing 15 % sodium sulfate was added. At this time, the system was separated into two phases of flocculated polymer component and an aqueous phase. To the resulting mixture was added 15 g (0.75 part) of an aqueous solution containing 15 % calcium chloride to yield an aqueous suspension of coagulated polymer particles. To prevent melt-adhesion between the coagulated polymer particles, 60 g (1.0 part) of an aqueous solution containing 5 % potassium palmitate was added, and then heat treatment was performed at 80°C.

COMPARATIVE EXAMPLE 1

Latex A prepared by emulsion polymerization (volume-average particle size: 0.175 μm, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer: 100 parts on a solid basis) and 500 g of deionized water, and the resulting mixture was maintained at 20°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes, and subsequently 10 g (0.75 part) of an aqueous solution containing 15 % sodium sulfate was added. At this time, the system was separated into two phases of flocculated polymer component and an aqueous phase. To the resulting mixture was added 10 g (0.75 part) of an aqueous solution containing 15 % calcium chloride to yield a creamy aqueous suspension of coagulated fine polymer particles.

COMPARATIVE EXAMPLE 2

Latex A prepared by emulsion polymerization (volume-average particle size: 0.175 μm, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer: 100 parts on a solid basis) and 500 g of deionized water, and the resulting mixture was maintained at 60°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes, and subsequently 10 g (0.75 part) of an aqueous solution containing 15 % sodium sulfate was added. At this time, the system was separated into two phases of flocculated polymer component and an aqueous phase. To the resulting mixture was added 10 g (0.75 part) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added. Then heat treatment was performed at 80°C.

COMPARATIVE EXAMPLE 3

Latex A prepared by emulsion polymerization (volume-average particle size: 0.175 μm, polymer solid content: 40 %, and softening temperature of the polymer: 40°C) was prepared in the same manner as in EXAMPLE 1.

To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 5.0 g (0.025 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 0.5 minutes. At this time, the viscosity of the system was increased. To the resulting mixture was added 20 g (1.5 parts) of an aqueous solution containing 15 % calcium chloride to yield an aqueous suspension of coagulated polymer particles. To prevent melt-adhesion between the coagulated polymer particles, 40 g (1.0 part) of an aqueous solution containing 5 % potassium palmitate was added.

Then heat treatment was performed at 80°C.

COMPARATIVE EXAMPLE 4

Latex A prepared by emulsion polymerization (volume-average particle size: 0.175 μm, polymer solid content: 40 %, and softening temperature of the polymer: 40°C) was prepared in the same manner as in EXAMPLE 1.

[0092] - To a 2 L separable flask were added 500 g of latex A prepared by emulsion polymerization (amount of polymer: 100 parts on a solid basis) and 500 g of deionized water, and the resulting mixture was maintained at 40°C (polymer solid content: 20 %). With stirring, 40 g (0.2 part) of an aqueous solution containing 1 % polyethylene oxide (PEO-8Z, viscosity-average molecular weight: 1,700,000 to 2,200,000, manufactured by Sumitomo Seika Chemicals Company Limited) was continuously added to the resulting mixture over a period of 3 minutes. At this time, the system was separated into two phases of flocculated polymer component and an aqueous phase. To the resulting mixture was added 1.3 g (0.10 part) of an aqueous solution containing 15 % calcium chloride to yield an aqueous suspension containing coagulated polymer particles and a flocculated polymer component. To prevent melt-adhesion between the coagulated polymer particles, 40 g (1.0 part) of an aqueous solution containing 5 % potassium palmitate was added. Then heat treatment was performed at 80°C.

COMPARATIVE EXAMPLE 5

Latex A prepared by emulsion polymerization (volume-average particle size: 0.175 μm, polymer solid content: 40 %, and softening temperature of the polymer: 40°C) was prepared in the same manner as in EXAMPLE 1.

To a 2 L separable flask were added 750 g of latex A prepared by emulsion polymerization (amount of polymer: 100 parts on a solid basis) and 250 g of deionized water, and the resulting mixture was maintained at 40°C (polymer solid content: 30 %). With stirring, 25 g (0.25 part) of an aqueous solution containing 3 % poly(vinyl alcohol) (GH-20M, manufactured by The Nippon Synthetic Chemical Industry Co., Ltd.) was added. Subsequently 15 g (0.75 part) of an aqueous solution containing 15 % sodium sulfate was added. To the resulting mixture was added 15 g (0.75 part) of an aqueous solution containing 15 % calcium chloride to yield an aqueous suspension of coagulated polymer particles. To prevent melt-adhesion between the coagulated polymer particles, 60 g (1.0 part) of an aqueous solution containing 5 % potassium palmitate was added, and then heat treatment was performed at 80°C.

REFERENCE EXAMPLE

Latex A prepared by emulsion polymerization (volume-average particle size: 0.175 μm, polymer solid content: 40 %, and softening temperature of the polymer: 40°C) was prepared in the same manner as in EXAMPLE 1.

To a 2 L separable flask were added 200 g of latex A prepared by emulsion polymerization (amount of polymer: 100 parts on a solid basis) and 800 g of deionized water, and the resulting mixture was maintained at 5°C (polymer solid content: 8 %). With stirring, 32 g (6.0 parts) of an aqueous solution containing 15 % calcium chloride was added to the resulting mixture to yield an aqueous suspension of coagulated polymer particles. To prevent melt-adhesion between the coagulated polymer particles, 16 g (1.0 part) of an aqueous solution containing 5 % potassium palmitate was added, and then heat treatment was performed at 80°C.

Table 1 shows the measured values of the softening temperatures (Tm) of the polymers in latices A to D prepared by emulsion polymerization in the bottom row. The numeric values except for values in the bottom row of Table 1 represent the water content at predetermined temperatures. The row of the heat treatment at 20°C represents the water content before heating. The softening temperature (Tm) of the polymer in latex A prepared by emulsion polymerization was 40°C, the softening temperatures (Tm) of the polymers in latices B and C prepared by emulsion polymerization were 70°C, and the softening temperature (Tm) of the polymer in latex D prepared by emulsion polymerization was 75°C.

TABLE 1

| Temperature for heat treatment (°C) | Latex A | Latex B | Latex C | Latex D |
|---|---|---|---|---|
| 20 | 51.2 | 60.9 | 60.0 | 62.0 |
| 25 | 51.2 | | | |
| 30 | 50.7 | | | |
| 35 | 49.4 | | | |
| 40 | 45.7 | 61.8 | 58.4 | 61.8 |
| 45 | 43.2 | 61.5 | 59.5 | 61.2 |
| 50 | 41.4 | 62.0 | 58.6 | 60.4 |

(continued)

| Temperature for heat treatment (°C) | Latex A | Latex B | Latex C | Latex D |
|---|---|---|---|---|
| 55 | 38.2 | 61.0 | 57.5 | 61.0 |
| 60 | 36.9 | 58.8 | 58.6 | 61.4 |
| 65 | 35.1 | 57.9 | 57.5 | 60.1 |
| 70 | 33.9 | 40.3 | 36.5 | 59.1 |
| 75 | 33.2 | 39.8 | 37.5 | 56.5 |
| 80 | 32.5 | 39.6 | 35.4 | 46.5 |
| 85 | | 40.2 | 36.5 | 45.5 |
| 90 | | 40.5 | 36.5 | 44.4 |
| 95 | | 40.1 | 37.5 | 44.6 |
| 99 | | 40.3 | 37.8 | 44.8 |
| Softening temperature (Tm) of polymer (°C) | 40 | 70 | 70 | 75 |

Table 2 shows the types of latices prepared by emulsion polymerization, the softening temperatures (Tm) of the polymers, the particle sizes in latices, the solid contents when coagulated, and the temperatures when coagulated in Examples 1 to 18, Comparative Examples 1 to 5, and Reference example.

TABLE 2

| | Type of latex prepared by emulsion polymerization | Softening temperature (Tm) of polymer (°C) | Particle size of latex ($\mu$m) | Solid content when coagulated (%) | Temperature when coagulated (°C) |
|---|---|---|---|---|---|
| Ex. 1 | A | 40 | 0.175 | 20 | 40 |
| Ex. 2 | A | 40 | 0.175 | 10 | 40 |
| Ex. 3 | A | 40 | 0.175 | 30 | 40 |
| Ex. 4 | A | 40 | 0.175 | 35 | 40 |
| Ex. 5 | A | 40 | 0.175 | 20 | 25 |
| Ex. 6 | A | 40 | 0.175 | 20 | 55 |
| Ex. 7 | A | 40 | 0.175 | 31 | 40 |
| Ex. 8 | A | 40 | 0.175 | 20 | 40 |
| Ex. 9 | A | 40 | 0.175 | 20 | 40 |
| Ex. 10 | A | 40 | 0.175 | 20 | 40 |
| Ex. 11 | A | 40 | 0.175 | 20 | 40 |
| Ex. 12 | A | 40 | 0.175 | 20 | 40 |
| Ex. 13 | A | 40 | 0.175 | 20 | 40 |
| Ex. 14 | B | 70 | 0.138 | 16 | 75 |
| Ex. 15 | C | 70 | 0.072 | 16 | 75 |
| Ex. 16 | D | 75 | 0.250 | 20 | 80 |
| Ex. 17 | A | 40 | 0.175 | 30 | 40 |
| Ex. 18 | A | 40 | 0.175 | 30 | 40 |
| Com. Ex. 1 | A | 40 | 0.175 | 20 | 20 |
| Com. Ex. 2 | A | 40 | 0.175 | 20 | 60 |
| Com. Ex. 3 | A | 40 | 0.175 | 20 | 40 |
| Com. Ex. 4 | A | 40 | 0.175 | 20 | 40 |
| Com. Ex. 5 | A | 40 | 0.175 | 30 | 40 |
| Ref. Ex. | A | 40 | 0.175 | 8 | 5 |

Table 3 shows the viscosity-average molecular weight of polyethylene oxide, the parts of polyethylene oxide used, the types and amounts of nonionic surfactants added, the types of coagulants, and the parts of coagulants used in Examples 1 to 18, Comparative Examples 1 to 5, and Reference Example.

TABLE 3

| | Viscosity-average molecular weight of polyethylene oxide (unit: ten thousand) | Amount of polyethylene oxide used (part) | (Type of nonionic surfactant)/ (amount of surfactant added) (part) | Type of coagulant | Part of coagulant used |
|---|---|---|---|---|---|
| Ex. 1 | 170-220 | 0.2 | - | (Sodium sulfate) / (Calcium chloride) | 0.75/0.75 |
| Ex. 2 | 170-220 | 0.2 | - | DITTO | DITTO |
| Ex. 3 | 170-220 | 0.2 | - | DITTO | DITTO |
| Ex. 4 | 170-220 | 0.2 | - | DITTO | DITTO |
| Ex. 5 | 170-220 | 0.2 | - | DITTO | DITTO |
| Ex. 6 | 170-220 | 0.2 | - | DITTO | DITTO |
| Ex. 7 | 60-110 | 0.3 | - | DITTO | DITTO |
| Ex. 8 | 430-480 | 0.05 | - | DITTO | DITTO |
| Ex. 9 | 600-800 | 0.05 | - | DITTO | DITTO |
| Ex. 10 | 170-220 | 3.0 | - | DITTO | 0.75/3.0 |
| Ex.11 | 170-220 | 0.2 | - | (Calcium chloride) | 0.75 |
| Ex. 12 | 170-220 | 0.2 | - | DITTO | 0.3 |
| Ex. 13 | 170-220 | 0.2 | - | DITTO | 10 |
| Ex. 14 | 170-220 | 0.2 | - | DITTO | 0.75 |
| Ex. 15 | 170-220 | 0.2 | -- | (Sodium sulfate) / (Calcium chloride) | 0.75/0.75 |
| Ex. 16 | 170-220 | 0.1 | - | (Calcium chloride) | 0.75 |
| Ex. 17 | 170-220 | 0.2 | (poly(vinyl alcohol))/ (0.25 part) | (Sodium sulfate)/ (Calcium chloride) | 0.75/0.75 |
| Ex. 18 | 170-220 | 0.2 | (Poly(vinyl alcohol))/ (0.05 part) | DITTO | DITTO |
| Com. Ex. 1 | 170-220 | 0.2 | - | DITTO | DITTO |
| Com. Ex. 2 | 170-220 | 0.2 | - | DITTO | DITTO |
| Com. Ex. 3 | 170-220 | 0.025 | - | (Calcium chloride) | 1.5 |
| Com. Ex. 4 | 170-220 | 0.2 | - | DITTO | 0.1 |
| Com. Ex. 5 | - | - | (Poly(vinyl alcohol))/ (0.25 parts) | (Sodium sulfate)/ (Calcium chloride) | 0.75/0.75 |
| Ref. Ex. | - | - | - | (Calcium chloride) | 6.0 |

Table 4 shows the water contents, volume-average particle sizes, the amounts (%) of coarse particles remaining on 16-mesh screen, and the amounts (%) of finely powdered particles having a volume-average particle size of less than 50 $\mu$m with respect to the coagulated polymer particles obtained from emulsion polymerization latex in Examples 1 to 18, Comparative Examples 1 to 5, and Reference Example.

TABLE 4

| | Type of latex prepared by emulsion polymerization | Water content (%) | Average particle size of coagulated particles ($\mu$m) | Coarse particle content (%) | Fine particle content (%) |
|---|---|---|---|---|---|
| Ex. 1 | A | 28.3 | 197 | 0.5 | 2.8 |
| Ex. 2 | A | 34.2 | 202 | 0.1 | 1.2 |

(continued)

|  | Type of latex prepared by emulsion polymerization | Water content (%) | Average particle size of coagulated particles ($\mu$m) | Coarse particle content (%) | Fine particle content (%) |
|---|---|---|---|---|---|
| Ex. 3 | A | 24.0 | 272 | 7.8 | 4.2 |
| Ex. 4 | A | 22.1 | 268 | 8.3 | 5.7 |
| Ex. 5 | A | 27.9 | 154 | 0.1 | 3.9 |
| Ex. 6 | A | 32.1 | 287 | 6.2 | 0 |
| Ex. 7 | A | 30.6 | 255 | 10.9 | 3.8 |
| Ex. 8 | A | 31.9 | 150 | 0.6 | 5.0 |
| Ex. 9 | A | 28.7 | 172 | 0.1 | 6.2 |
| Ex. 10 | A | 29.6 | 201 | 0.7 | 3.8 |
| Ex. 11 | A | 27.6 | 231 | 0.1 | 2.6 |
| Ex. 12 | A | 28.6 | 186 | 0.1 | 3.1 |
| Ex. 13 | A | 26.2 | 176 | 0.4 | 1.1 |
| Ex. 14 | B | 28.2 | 219 | 2.9 | 3.3 |
| Ex. 15 | C | 29.8 | 164 | 2.7 | 2.9 |
| Ex. 16 | D | 36.0 | 278 | 0.5 | 0.9 |
| Ex. 17 | A | 23.4 | 252 | 1.8 | 5.6 |
| Ex. 18 | A | 22.8 | 277 | 3.8 | 3.8 |
| Com. Ex. 1 | A | 46.0 | 12 | 0 | 99.9 |
| Com. Ex. 2 | A | 37.2 | 407 | 29.1 | 0.1 |
| Com. Ex. 3 | A | 34.2 | 350 | 8.2 | 11.7 |
| Com. Ex. 4 | A | Hard to filter | - | - | - |
| Com. Ex. 5 | A | 48.5 | 287 | 22.3 | 4.6 |
| Ref. Ex. | A | 45.5 | 221 | 18.9 | 10.8 |

From the results described above, the method according to the present invention for manufacturing coagulated particles from latex prepared by emulsion polymerization provides a granulating operation having the following excellent advantages compared with conventional granulating processes such as salting-out and coagulation techniques: (I) A low content of fine powder having a volume-average particle size of less 50 $\mu$m; (II) coagulated particles with low energy consumption during drying due to a low water content; (III) high energy efficiency due to a granulating operation that can be performed in the vicinity of the softening temperature of the polymer (in the vicinity of the polymerization temperature); and (IV) a reduction in load in waste water treatment due to the granulating operation that can be performed at a solid content of 10 percent by weight or more. Furthermore, from the comparison between Examples 3 and Examples 17 and 18, in the case of a high polymer solid content in latex prepared by emulsion polymerization within the scope of the present invention, the coexistence of a nonionic surfactant other than polyethylene oxide significantly reduces a coarse particle content in produced coagulated particles.

## Claims

1.   A method for manufacturing coagulated particles from a latex prepared by emulsion polymerization, comprising: step (A) of adjusting the temperature of a latex prepared by emulsion polymerization within the range of Tm $\pm$ 15°C wherein Tm represents the softening temperature of the polymer in the latex, the amount of the latex being 100 parts by weight on a polymer solid basis; step (B) of adding 0.03 to 3.0 parts by weight of polyethylene oxide with stirring; step (C) of adding 0 to 1.5 parts by weight of a coagulant to cause phase separation of a polymer component from an aqueous phase; step (D) of further adding 0.2 to 10 parts by weight of a coagulant to form an aqueous suspension containing coagulated polymer particles having a volume-average particle size of 50 to 500 $\mu$m; and step (E) of adjusting the temperature of the suspension to Tm or more.

2.   The method according to Claim 1, further comprising a step of: adding 0.01 to 3.0 parts by weight of a nonionic surfactant other than polyethylene oxide based on 100 parts by weight of the polymer solid content at latest before the step (D) of adding the coagulant.

3. The method according to Claim 1 or 2, wherein the polymer in the latex prepared by emulsion polymerization has a volume-average particle size of 0.05 to 0.5 $\mu$m.

4. The method according to any one of Claims 1 to 3, wherein the latex prepared by emulsion polymerization has a polymer solid content of 10 to 35 percent by weight.

5. The method according to any one of Claims 1 to 4, wherein the temperature of the latex prepared by emulsion polymerization is adjusted within the range of Tm $\pm$ 10°C wherein Tm represents the softening temperature of the polymer.

6. The method according to any one of Claims 1 to 5, wherein a 0.01 to 10 percent by weight aqueous solution of polyethylene oxide that has a viscosity-average molecular weight of 600,000 to 8,000,000 is added in an amount of 0.05 to 2.0 parts by weight based on 100 parts by weight of the polymer on a solid basis.

7. The method according to any one of Claims 2 to 6, wherein a 0.01 to 10 percent by weight aqueous solution of a nonionic surfactant other than polyethylene oxide is added in an amount of 0.05 to 2.0 parts by weight based on 100 parts by weight of the polymer on a solid basis.

8. The method according to any one of Claims 1 to 7, wherein the coagulant is an aqueous solution of a monovalent or divalent inorganic salt and/or an inorganic acid.

9. The method according to any one of Claims 1 to 8, wherein the polymer latex is prepared by polymerizing 50 to 100 percent by weight of an acrylic acid ester, 0 to 40 percent by weight of an aromatic vinyl monomer, 0 to 10 percent by weight of a vinyl monomer copolymerizable with the acrylic acid ester and the aromatic vinyl monomer, and 0 to 5 percent by weight of a multi-functional monomer to form a rubber latex having a glass transition temperature of 0°C or less, and then graft-polymerizing 50 to 95 parts by weight, on a solid basis, of the rubber latex with 5 to 50 parts by weight of a monomer mixture containing 10 to 100 percent by weight of a methacrylic acid ester, 0 to 90 percent by weight of an aromatic vinyl monomer, 0 to 25 percent by weight of a vinyl cyanide monomer, and 0 to 20 percent by weight of a vinyl monomer copolymerizable with the methacrylic acid ester, the aromatic vinyl monomer, and the vinyl cyanide monomer.

10. The method according to any one of Claims 1 to 8, wherein the polymer latex is prepared by emulsion-polymerizing 60 to 95 parts by weight of a mixture containing 50 to 95 percent by weight of methyl methacrylate, 5 to 50 percent by weight of a methacrylic acid ester having a C$_{2-8}$ alkyl group, and 0 to 20 percent by weight of a vinyl monomer copolymerizable with the methyl methacrylate and the methacrylic acid ester; and then polymerizing, in the presence of the resulting polymer latex, 5 to 40 parts by weight of a mixture containing 20 to 80 percent by weight of methyl methacrylate, 20 to 80 percent by weight of at least one monomer selected from acrylic acid esters and methacrylic acid esters other than methyl methacrylate, and 0 to 20 percent by weight of a vinyl monomer copolymerizable with the forgoing monomers, the total amount being 100 parts by weight.

11. The method according to any one of Claims 1 to 8, wherein the polymer latex is prepared by polymerizing 50 to 100 percent by weight of butadiene, 0 to 40 percent by weight of an aromatic vinyl monomer, 0 to 10 percent by weight of a vinyl monomer copolymerizable with butadiene and the aromatic vinyl monomer, and 0 to 5 percent by weight of a multi-functional monomer to form a rubber latex having a glass transition temperature of 0°C or less; and then graft-polymerizing 50 to 95 parts by weight, on a solid basis, of the rubber latex with 5 to 50 parts by weight of a monomer mixture containing 10 to 100 percent by weight of a methacrylic acid ester, 0 to 90 percent by weight of an aromatic vinyl monomer, 0 to 25 percent by weight of a vinyl cyanide monomer, and 0 to 20 percent by weight of a vinyl monomer copolymerizable with the methacrylic acid ester, the aromatic vinyl monomer, and the vinyl cyanide monomer.

## INTERNATIONAL SEARCH REPORT

| | International application No. |
|---|---|
| | PCT/JP2004/019823 |

### A. CLASSIFICATION OF SUBJECT MATTER
Int.Cl⁷ C08F6/22, C08F265/04, C08F279/02

According to International Patent Classification (IPC) or to both national classification and IPC

### B. FIELDS SEARCHED

Minimum documentation searched (classification system followed by classification symbols)
Int.Cl⁷ C08F6/14-6/22, C08F265/04, C08F279/02

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 4-258618 A (Hitachi Chemical Co., Ltd.), 14 September, 1992 (14.09.92), Claims; Par. No. [0016] (Family: none) | 1-10 |
| A | JP 62-74908 A (Japan Synthetic Rubber Co., Ltd.), 06 April, 1987 (06.04.87), Claims; page 3, lower right column, lines 7 to 16; page 5, upper left column, line 16 to lower left column, line 17 (Family: none) | 1-10 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 March, 2005 (28.03.05) | 12 April, 2005 (12.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

<table>
<tr><td colspan="2">**INTERNATIONAL SEARCH REPORT**</td><td>International application No.<br>PCT/JP2004/019823</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| A | JP 63-117006 A (Ube Cycon, Ltd.),<br>21 May, 1988 (21.05.88),<br>Claims; page 3, upper left column, line 16 to upper right column, line 15<br>(Family: none) | 1-10 |
| A | JP 8-120172 A (General Electric Co.),<br>14 May, 1996 (14.05.96),<br>Claims<br>& US 5470895 A          & EP 687689 A1 | 1-10 |
| A | JP 7-138314 A (Japan Synthetic Rubber Co., Ltd.),<br>30 May, 1995 (30.05.95),<br>Claims<br>(Family: none) | 1-10 |
| A | JP 10-279640 A (Ube Cycon, Ltd.),<br>20 October, 1998 (20.10.98),<br>Claims<br>(Family: none) | 1-10 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 52068285 A
- JP 60217224 A
- JP 59084922 A
- JP 2269755 A
- JP 8217817 A